# EUROPÄISCHE PATENTANMELDUNG

(11) **EP 1 804 222 A2**
(43) Veröffentlichungstag der Anmeldung: **04.07.2007**
(21) Anmeldenummer: 06021421.0
(22) Anmeldetag: 12.10.2006
(51) Int. Cl.: G08C 17/02

(54) **Bidirektionales Funkübertragungssystem**

(30) Priorität: 28.12.2005 DE 102005062809
(71) Anmelder: Prof. Dr. Horst Ziegler und Partner GbR, 33100 Paderborn (DE)
(72) Erfinder: Ziegler, Horst, Prof. Dr., 33100 Paderborn (DE)
(74) Vertreter: Tiesmeyer, Johannes

(57) **Zusammenfassung**

Bidirektionales Funkübertragungssystem mit wenigstens einem ersten Funkgerät (1) und einem zur zeitweisen Funkkommunikation mit dem ersten Funkgerät (1) betreibbaren zweiten Funkgerät (2), dadurch gekennzeichnet, dass das erste Funkgerät (1) dazu eingerichtet ist, bei Empfang eines Funksignals (A) von dem zweiten Funkgerät (2) dessen aktuelle Übertragungsfrequenz zu erfassen und die eigene Funksendefrequenz für eine Funksendung (B) zum zweiten Funkgerät (2) nach Maßgabe der erfassten Übertragungsfrequenz einzustellen.

## Beschreibung

Die Erfindung betrifft ein bidirektionales Funkübertragungssystem mit einem ersten Funkgerät und einem zur zeitweisen Funkkommunikation mit dem ersten Funkgerät betreibbaren zweiten Funkgerät.

Der Erfinder beschäftigt sich mit der Integration eines derartigen Funkübertragungssystems in ein Verbrauchsdaten-Erfassungssystem, bei dem Verbrauchsmessgeräte oder Verbrauchszähler, wie beispielsweise elektrische Heizkostenverteiler, Warmwasserzähler, Wärmemengenzähler, Gaszähler, Stromzähler oder dgl., an betreffenden Verbrauchsstellen, z.B. in Wohnungen, vorgesehen sind.

Die Funkablesung von Verbrauchszählern ist eine zunehmend mehr genutzte Möglichkeit, die Verbrauchsmengeninformationen zur verbrauchsabhängigen Abrechnung ohne Betreten der betreffenden Wohnungen zu erhalten.

Die meisten bekannten Verbrauchsdaten-Erfassungssysteme mit Funkdatenablesung weisen unidirektionale Funkübertragungssysteme auf. Zum Stand der Technik derartiger Funksysteme und damit ausgestatteter Verbrauchsdaten-Erfassungssysteme kann z.B. auf die EP 1 028 403 A2, die EP 1 037 185 A2 oder die EP 1 392 078 A2 verwiesen werden. Bei solchen Verbrauchsdaten-Erfassungssystemen sind in den betreffenden Nutzungseinheiten eines Gebäudes vorgesehene Verbrauchszähler mit Funksendern ausgestattet, die Zählerstandsdaten und Kennungsinformationen zur Verbrauchszähler-Identifizierung zu bestimmten bzw. pseudostochastisch eingerichteten Sendezeitintervallen senden. Diesen Funksender-Endgeräten sind Primärempfänger zugeordnet, welche die Funktelegramme empfangen und daraus abgeleitete Daten ggf. über weitere Stationen an eine Abrechnungszentrale senden. Bei den Funksender-Endgeräten handelt es sich häufig um batteriebetriebene Geräte mit unidirektionalem Funkbetrieb und somit ohne Funkempfangsfunktion.

In mehrstöckigen Wohngebäuden wird häufig ein Primärempfänger pro Stockwerk vorgesehen, der z.B. im Treppenhaus installiert ist. In der EP 1 037 185 A2 ist ein Funknetz mit mehreren Primärempfängern und einer Vielzahl von Funksender-Endgeräten beschrieben. Charakteristisch für ein solches konventionelles Funknetz ist, dass der Gebäudefunk in einem geeigneten und durch die europäische Frequenznutzungsrichtlinie ERC/REC-70-03 für solche "Short Range Devices (SRD)" zugelassenen Frequenzband erfolgt, weil ein solches Frequenzband von jedermann ohne Gebührenzahlungspflicht genutzt werden kann.

Es gibt verschiedene solcher Frequenzbänder mit unterschiedlichen funktechnischen Parametern, wie etwa der maximalen Sendeleistung, der Modulationsart, der zulässigen Kanalbelegungsdauer pro Zeiteinheit (Duty-Cycle) usw.

Die derzeit häufig benutzten unidirektional sendenden und aus Batterien elektrisch gespeisten Verbrauchsmessgeräte haben den Nachteil, dass durch die begrenzte Batteriekapazität bei den vergleichsweise häufigen Funkübetragungen die realisierbare Sendeleistung gering, die erforderliche Datenrate hoch und damit die erforderliche Empfängerbandbreite entsprechend groß ist, wodurch jedoch die Empfangsempfindlichkeit und damit die Reichweite der Funkübertragungsstrecke gering sind. Ferner müssen die Funktelegramme zeitlich kurz sein, so dass nur wenige elementare Daten übertragen werden können. Hinzu kommt, dass die Belegung des betreffenden Funkkanals in Gebieten mit einer großen Anzahl von funkenden Endgeräten durch die häufige unidirektionale Aussendung der Telegramme sehr groß ist, so dass andere Anwendungen in dem Frequenzband häufig gestört werden.

Die vorliegende Erfindung befasst sich mit einem bidirektionalen Funkübertragungssystem, bei welchem die ersten Funkgeräte als Endgeräte und die zweiten Funkgeräte als Datensammelgeräte sowohl Sendefunktion als auch Empfangsfunktion haben. Bidirektionale Funksysteme sind im Vergleich mit unidirektionalen Funksystemen teurer, da die Funkgeräte sämtlich mit im Vergleich zu den Sendekomponenten aufwendigeren Empfängerkomponenten ausgestattet sein müssen. Bei bidirektionalen Funksystemen der eingangs genannten Art mit stationären Funkstationen als zweite Funkgeräte gehen die Endgeräte, also die ersten Funkgeräte in periodischen oder pseudostochastischen Zeitintervallen für die Dauer ihrer relativen Uhrzeittoleranz kurz auf Empfang, um Nutztelegramme oder Synchronisationstelegramme von dem betreffenden zweiten Funkgerät zu empfangen, wobei sie das zeitliche Eintreffen solcher Funktelegramme z.B. entsprechend der EP 1 028 403 A2 zur Resynchronisation ihrer Systemuhrzeit und ggf. zusätzlich zur Korrektur des Taktgebers für ihre Systemzeitmessung verwenden. Die Nutztelegramme oder Synchronisationstelegramme können genutzt werden, um die mit einem jeweiligen ersten Funkgerät ausgestatteten Endgeräte zum Aussenden ihrer Zählerstandsinformationen zu veranlassen.

Alternativ oder zusätzlich zu der Funkablesung mit stationären Funkgeräten bzw. Funkdatensammlern kommt auch die sogenannte "Mobilauslesung" in Frage, bei welcher ein mobiles Funkgerät als zweites Funkgerät benutzt wird. Das mobile Funkgerät wird in Funkreichweite der Endgeräte (ersten Funkgeräte) gebracht, um bidirektionale Funkkommunikation herstellen zu können. Bei der Mobilauslesung werden die ersten Funkgeräte üblicherweise durch ein längeres "Aufwecktelegramm" des mobilen Primärgerätes aus einem quasi Stand-by-Modus heraus aktiviert, wozu die ersten Funkgeräte in dem Stand-by-Modus periodisch oder stochastisch mit maximalen Zeitabständen kleiner als die Dauer des "Aufwecktelegramms" in Empfangsbereitschaft übergehen und kurz das Vorhandensein eines solchen "Aufwecktelegramms" abfragen. Dies erfolgt unter Kontrolle der internen Funksteuerungseinrichtung des betreffenden Funkgerätes. Dem "Aufwecktelegramm" kann eine Selektion bestimmter Endgeräte, also etwa Verbrauchszähler, zur Funkablesung oder/und ggf. eine Nutzdatenübertragung vom zweiten Funkgerät in Richtung zum ersten Funkgerät folgen.

Im Vergleich zu unidirektionalen Systemen erlauben die bidirektionalen Funksysteme eine zuverlässige Verbrauchsdatenerfassung bei erheblich seltenerer Funkübertragung von den Endgeräten (ersten Funkgeräten) zu den primären Datensammelgeräten (zweiten Funkgeräten). Unter Batterielebensdauer-Gesichtspunkten wäre es somit denkbar, die selteneren Verbrauchsdatenübertragungen mit einer höheren Sendeleistung und somit mit einer größeren Funkreichweite durchzuführen, etwa um mit einem primären Datensammelgerät eine größere Anzahl an örtlich verteilten Endgeräten für die Funkablesung erfassen zu können. Dies wird allerdings durch die maximal zulässige Sendeleistung von z.B. nur 25 mW in den hierfür meist benutzten, statistisch weniger belegten Frequenzbändern mit Duty-Cycle-Grenzen von 1 % oder 0,1 % wieder eng begrenzt.

Da der Strombedarf einer Empfängerkomponente typischerweise weniger als halb so groß ist wie der einer Sendekomponente, lassen sich bei gleicher Batteriekapazität höhere Abtastraten bei der Abfrage des Vorhandenseins eines "Aufwecktelegramms" und damit eine schnellere mobile Funkablesung realisieren, als dies bei unidirektionalen Systemen möglich ist, bei welchen in periodischen oder quasistochastischen Zeitabständen Funktelegramme von den Endgeräten unaufgefordert gesendet werden.

Störend ist sowohl bei stationären als auch bei mobilen bidirektionalen Funksystemen weiterhin die begrenzte Reichweite, denn die Empfängerempfindlichkeit wird neben der Sendeleistung vor allem durch die erforderliche Empfängerbandbreite bestimmt. Die Empfängerbandbreite hängt wesentlich von der Frequenztoleranz der verwendeten Taktgeberelemente ab, bei denen es sich üblicherweise um Hf-Schwingquarze handelt. Insbesondere bei Verbrauchserfassungssystemen mit vielen Endgeräten und damit ausgerüsteten ersten Funkgeräten ist der Einsatz frequenzmäßig eng tolerierter Quarze zu teuer, wohingegen beim Datensammelgerät mit zweitem Funkgerät ein im Vergleich zu den Endgeräten erhöhter Aufwand, bei mobilen Datensammelgeräten sogar erheblich erhöhter Aufwand wirtschaftlich tolerabel ist. Dennoch bestimmt in beiden Funkrichtungen die große Frequenztoleranz der in den Endgeräten verwendeten Taktgeberquarzen die erforderliche große Empfangsbandbreite sowohl der Empfängerkomponenten in den ersten Funkgeräten als auch der Empfängerkomponenten in den zweiten Funkgeräten. Da die Funkverbindungen nur relativ selten aufgebaut werden und dann im Beispielsfall der Funkablesung von Verbrauchszählern meist nur für ca. 10 ms - 500 ms aufrechterhalten werden, ist auch eine Adaption der Empfängerkomponenten auf die jeweilige Sendefrequenz zumindest bei mobilen Funkgeräten nicht realisierbar.

Man hat bisher versucht, diese Probleme zu umgehen, indem man frequenzmäßig eng tolerierte Taktgeberquarze auch in den ersten Funkgeräten (Endgeräten) verwendet hat. Durch Beschränkung auf relativ niedrige Datenübertragungsraten von z.B. 2,4 kBaud wurde eine entsprechend größere Reichweite erhalten. Da in diesem Fall die Funkablesung vieler Zähler aber zu lange gedauert hat, hat man für die Verbrauchsdatenübertragung gelegentlich mehrere unterschiedliche Frequenzkanäle gleichzeitig benutzt.

Aufgabe der vorliegenden Erfindung ist es, ein bidirektionales Funkübertragungssystem, insbesondere zur Verwendung in der Verbrauchsdatenerfassung, bereitzustellen, welches kostengünstig realisierbar ist und eine möglichst große Funkreichweite hat.

Zur Lösung dieser Aufgabe wird erfindungsgemäß vorgeschlagen, ein bidirektionales Funkübertragungssystem der eingangs genannten Art in der Weise auszubilden, dass das erste Funkgerät dazu eingerichtet ist, bei Empfang eines Funksignals von dem zweiten Funkgerät dessen aktuelle Übertragungsfrequenz zu erfassen und die eigene Funksendefrequenz für eine nächste Funksendung zum zweiten Funkgerät nach Maßgabe der erfassten Übertragungsfrequenz einzustellen.

Mit dem Begriff Übertragungsfrequenz bzw. Funksendefrequenz soll hier die Trägerfrequenz des Signals bezeichnet werden. Das erste Funkgerät ist in der Lage, die eigene Funksendefrequenz für eine Funksendung zum zweiten Funkgerät unter Berücksichtigung der erfassten Übertragungsfrequenz so nachzustellen, dass das zweite Funkgerät die Funksendung in einem eng tolerierten Empfangsfrequenzband mit großer Wahrscheinlichkeit empfängt. Damit trifft selbst bei einem Frequenzfehler des Sendequarzes des ersten Funkgerätes oder auch des Empfangsquarzes des zweiten Funkgerätes die vom ersten Funkgerät eingestellte Sendefrequenz stets mit sehr großer Wahrscheinlichkeit das somit nahezu frequenztoleranzfrei eingrenzbare schmale Empfangsfrequenzband des zweiten Funkgerätes. Somit kann insbesondere bei geringer Datenrate bei Funkübertragung vom ersten Funkgerät zum zweiten Funkgerät auch mit kleiner Sendeleistung eine sehr große Reichweite erzielt werden. Die niedrige Datenrate mit entsprechend langen Telegrammsendedauern und somit höherem Batteriestrombedarf ist bei der vorliegenden bidirektionalen Lösung im Gegensatz zu unidirektionalen Systemen unproblematisch, da in den meisten Anwendungsfällen und insbesondere in dem bevorzugten Anwendungsfall der Funkauslesung von Verbrauchszählern das erste Funkgerät nur relativ selten Funktelegramme zu senden hat.

Sehr einfach gestaltet sich die Sendefrequenzanpassung des ersten Funkgerätes an die Empfangsfrequenz des zweiten Funkgerätes, wenn beiden Funkgeräten für Funkübertragung in beiden Funkübertragungsrichtungen dieselbe Nominalfrequenz zugeordnet ist. In diesem Fall passt die interne Funksteuerungseinrichtung des ersten Funkgerätes die Funksendefrequenz für eine nächste Funksendung zum zweiten Funkgerät möglichst exakt an die erfasste Übertragungsfrequenz des zweiten Funkgerätes an.

In dem Fall, dass den Funkgeräten erheblich verschiedene Nominalfrequenzen für die Funkübertragung in beiden Funkübertragungsrichtungen zugeordnet sind, wird es gemäß einer Ausgestaltung der Erfindung vorgeschlagen, dass das erste Funkgerät dazu eingerichtet ist, die eigene Funksendefrequenz für eine nächste Funksendung zum zweiten Funkgerät in Abhängigkeit von der Abweichung der erfassten Übertragungsfrequenz des zweiten Funkgerätes von der betreffenden Nominalfrequenz des zweiten Funkgerätes einzustellen. Grundsätzlich wird auch hier davon ausgegangen, dass bei dem zweiten Funkgerät der Sendebetrieb und der Empfangsbetrieb auf der Basis ein und desselben Frequenztaktgebers, insbesondere Hf-Quarzes erfolgt, so dass sich Frequenzabweichungen dieses Hf-Quarzes des zweiten Funkgerätes systematisch sowohl auf die Sendefrequenz als auch auf die optimale Empfangsfrequenz auswirken und das erste Funkgerät die erfasste Übertragungsfrequenz (= tatsächliche Sendefrequenz) des zweiten Funkgerätes zur Korrektur der eigenen Funksendefrequenz nutzen kann, um damit das tatsächliche optimale Empfangsband des zweiten Funkgerätes zu treffen.

Vorzugsweise erfolgt die Funksendefrequenzkorrektur des ersten Funkgerätes in der Weise, dass seine interne Funksendesteuerung die Nominalfunksendefrequenz um einen relativ Faktor ändert, der sich zumindest näherungsweise aus dem Verhältnis der erfassten Übertragungsfrequenz des zweiten Funkgerätes zu der betreffenden Nominalfrequenz des zweiten Funkgerätes ergibt. Eine alternative Korrekturmöglichkeit besteht darin, dass das erste Funkgerät seine eigene Funksendefrequenz für die nächste Funksendung zum zweiten Funkgerät in der Weise einstellt, dass es seine Nominal-Funksendefrequenz um einen Differenzwert ändert, der der Frequenzdifferenz zwischen der erfassten Übertragungsfrequenz des zweiten Funkgerätes zu der betreffenden Nominalfrequenz des zweiten Funkgerätes zumindest näherungsweise entspricht. Auch auf diese Weise wird ein Anpassungseffekt erzielt, der eine Verkleinerung der Empfangsbandbreite des zweiten Funkgerätes ermöglicht.

In Funkübertragungsrichtung vom zweiten Funkgerät zum ersten Funkgerät wird man bei der Wahl der Empfangsbandbreite des ersten Funkgerätes größere Frequenztoleranzen berücksichtigen müssen. Um den sich daraus ergebenden Empfindlichkeitsverlust in dieser Funkübertragungsrichtung auszugleichen, kann man z.B. durch Aufgabe der Forderung nach einer mehrjährigen Batterielebensdauer der Stromversorgung des zweiten Funkgerätes technisch höhere Sendeleistungen einsetzen und auf diese Weise die Funkreichweite erhöhen, soweit dies zulassungstechnisch möglich ist. Hierfür empfiehlt sich insbesondere das Frequenzband "i" der europäischen Frequenzzuteilungsrichtlinie ERC/REC-70-03, das im Frequenzbereich von 869,4 MHz - 869,65 MHz eine Sendeleistung von bis zu 500 mW bei einem Duty-Cycle von bis zu 10 % zulässt. Auch ein Endgeräteempfänger (erstes Funkgerät) mit einem preiswerten Taktgeberquarz und dementsprechend großer Empfangsbandbreite mit mäßiger Empfindlichkeit kann ein solch starkes Signal über eine relativ große Entfernung sicher empfangen. In umgekehrter Funkübertragungsrichtung empfiehlt sich der Einsatz des Frequenzbandes "f", das im Frequenzbereich von 868,0 MHz - 868,6 MHz eine Sendeleistung von bis zu 25 mW und einen Duty-Cycle von bis zu 1 % je Gerät zulässt. Bei stationären Datensammelstationen (zweiten Funkgeräten) kann das erste Funkgerät alternativ oder zusätzlich im Rahmen der gelegentlichen Zeitsynchronisation ggf. auch seine Empfangs- und Sendefrequenz kontinuierlich an das stationäre zweite Funkgerät anpassen und dann auch mit entsprechend geringerer Empfangsbandbreite arbeiten, so dass eine wesentlich höhere Sendeleistung der dann stationären Empfangsstation nicht erforderlich ist und die Funkübertragung auch in der Richtung zum ersten Funkgerät im selben Frequenzband mit der Leistungsbegrenzung auf 25 mW durchgeführt werden kann und trotzdem vergleichbare Funkreichweiten in beiden Funkübertragungsrichtungen erzielbar sind.

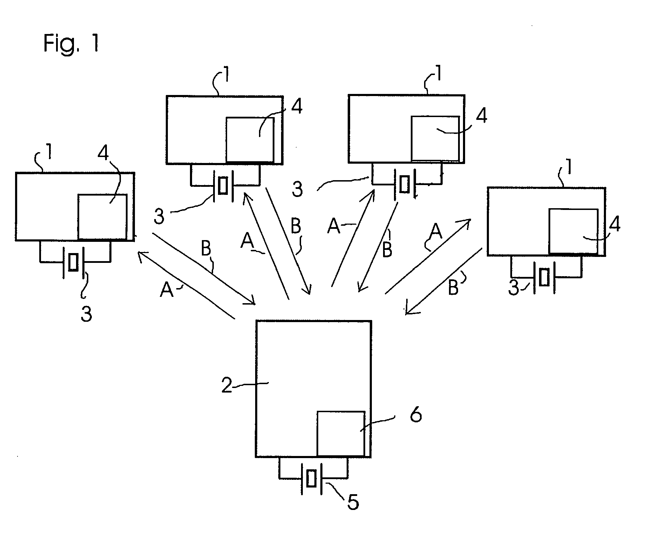

In der Figur 1 ist schematisch ein Funkübertragungssystem nach der Erfindung angedeutet. Es umfasst eine Vielzahl von Endgeräten 1, bei denen es sich um erste Funkgeräte handelt, welche Verbrauchszählern, etwa Wärmemengen-Verbrauchszählern, zugeordnet sind und deren Verbrauchsmesswerte per Funk zu einem zweiten Funkgerät 2 übertragen können, welches als Datensammelstation dient. Die Endgeräte 1 weisen als Taktgeber für den Funkbetrieb Hf-Schwingquarze 3 auf. Die für den Empfangsbetrieb und für den Sendebetrieb der Endgeräte 1 verwendete Frequenz wird somit von dem jeweiligen Quarz 3 abgeleitet. Sie kann jedoch von einer internen Funksteuerschaltung 4 bedarfsweise geändert werden. Das Datensammelgerät 2 hat ebenfalls einen Hf-Schwingquarz 5 als Taktgeber für den Funkbetrieb und eine Funksteuerschaltung 6. Die Funksteuerschaltungen 4, 6 umfassen eine Mikroprozessorschaltung und sind so programmiert, dass sie den Funkbetrieb nach einem bestimmten Ablaufschema organisieren. Zumindest die Endgeräte 1 sind im Beispielsfall batteriebetriebene Geräte.

Sämtliche Funkgeräte 1, 2 sind bidirektionale Geräte und können somit Funkbotschaften senden und Funkbotschaften empfangen. Vorzugsweise ist der Funkbetrieb des Funksystems nach Fig. 1 so organisiert, dass das Datensammelgerät 2 (zweites Funkgerät) den Endgeräten 1 (ersten Funkgeräten) Sendeaufforderungsbotschaften mit einem jeweiligen Funksignal A überträgt, woraufhin die Endgeräte 1 die angeforderten Informationen über den Verbrauchsmesswert an die Datensammelstation 2 nacheinander mit einem jeweiligen Funksignal B übertragen.

Es sei angenommen, dass für die Funkübertragung in beiden Übertragungsrichtungen dieselbe Nominalfrequenz verwendet werden sollte. Im Idealfall würde dies bedeuten, dass auch die tatsächlichen Ist-Trägerfrequenzen der Signale A den Ist-Trägerfrequenzen der Signale B gleich sind und dem Nominalwert exakt entsprechen. Da jedoch jedes Funkgerät 1, 2 seinen eigenen Frequenzgenerator 3, 5 aufweist, welcher mit Toleranz funktioniert, liegt der vorstehend angesprochene Idealfall in der Praxis normalerweise nicht vor. Bisher hat man daher in den Empfängerkomponenten sämtlicher Funkgeräte relativ große Empfängerbandbreiten reservieren müssen, bei deren Bemessung die Frequenztoleranz der Taktgeber 3, 5 und zusätzlich die Signalbandbreite des aufmodulierten Nutzsignals zu berücksichtigen war. Die so unvermeidlich große Empfängerbandbreite ging einher mit einer drastischen Empfindlichkeits- und somit Reichweitenreduktion. Diese Verringerung der Funkreichweite konnte durch Vergrößerung der jeweiligen Sendeleistung, insbesondere der Endgeräte, nicht wettgemacht werden, da dies der Forderung nach langer Lebensdauer der Endgerätebatterien entgegengestanden hätte.

Der vorliegenden Erfindung liegt die Überlegung zugrunde, dass zumindest beim Empfang der von den Endgeräten 1 gesendeten Funktelegramme B die Datensammelstation 2 mit sehr kleiner Empfangsbandbreite betrieben werden kann, so dass eine hohe Empfangsempfindlichkeit genutzt werden kann und die Endgeräte 1 somit batteriesparend mit geringer Sendeleistung senden können, ohne dass hierzu hochpräzise und teure Hf-Taktgeberquarze für den Funkbetrieb der Endgeräte 1 erforderlich wären.

Es sei der Einfachheit halber zunächst angenommen, dass die Endgeräte 1 und das Datensammelgerät 2 für die Funkübertragung in beiden Funkübertragungsrichtungen grundsätzlich die gleiche Nominalfrequenz für die Datenübertragung haben sollten. Da dies aufgrund der schon angesprochenen Frequenztoleranzen nicht zutreffen wird, sind die Endgeräte 1 erfindungsgemäß dazu in der Lage, ihre Funksendefrequenz jeweils nach Maßgabe der zuvor erfassten Übertragungsfrequenz des Datensammelgerätes 2 möglichst genau anzupassen, so dass die nächste Funkbotschaft des betreffenden Endgerätes 1 an das Datensammelgerät 2 mit großer Wahrscheinlichkeit exakt in dessen schmales Empfangsband fällt.

Für den Fall, dass das Datensammelgerät 2 zum Endgerät 1 mit der Frequenz f1 sendet und Funkbotschaften von den Endgeräten 1 mit der davon unterschiedlichen Frequenz f2 empfängt, kann die Korrektur der eigenen Funksendefrequenz des betreffenden Endgerätes 1 z.B. in folgender Weise erfolgen: Die Funksteuerschaltung 4 des Endgerätes 1 bildet einen relativen Faktor entsprechend dem Verhältnis aus tatsächlicher Übertragungsfrequenz f1 (ist) zu nominaler Übertragungsfrequenz f1 (soll) und multipliziert den Nominalwert der Endgerätesendefrequenz f2 (soll) mit diesem relativen Faktor, um auf der so korrigierten Frequenz f2 (ist) zu senden. Die Datensammelstation 2 sendet mit größerer Sendeleistung z.B. im Frequenzbereich 869,4 MHz - 869,65 MHz.

Von der Erfindung soll eine Variante des Funkübertragungssystems mitumfasst sein, bei der die ersten Funkgeräte 1 auch ihre Empfangsfrequenzen an Übertragungsfrequenzen des zweiten Funkgerätes anpassen, um auf diese Weise eine Bandbreitenbeschränkung realisieren zu können, welche es ermöglicht, auch in Richtung vom Datensammelgerät 2 in Richtung zu einem betreffenden Endgerät 1 mit geringer Sendeleistung zu senden.

## Patentansprüche

1. Bidirektionales Funkübertragungssystem mit wenigstens einem ersten Funkgerät (1) und einem zur zeitweisen Funkkommunikation mit dem ersten Funkgerät (1) betreibbaren zweiten Funkgerät (2), **dadurch gekennzeichnet, dass** das erste Funkgerät (1) dazu eingerichtet ist, bei Empfang eines Funksignals (A) von dem zweiten Funkgerät (2) dessen aktuelle Übertragungsfrequenz zu erfassen und die eigene Funksendefrequenz für eine Funksendung (B) zum zweiten Funkgerät (2) nach Maßgabe der erfassten Übertragungsfrequenz einzustellen.

2. Bidirektionales Funkübertragungssystem nach Anspruch 1, wobei dem ersten Funkgerät (1) und dem zweiten Funkgerät (2) dieselbe Nominalfrequenz für die Funkübertragung in beiden Funkübertragungsrichtungen zugeordnet ist, **dadurch gekennzeichnet, dass** das erste Funkgerät (1) dazu eingerichtet ist, die eigene Funksendefrequenz für eine Funksendung zum zweiten Funkgerät (2) an die erfasste Übertragungsfrequenz des zweiten Funkgerätes (2) anzupassen.

3. Bidirektionales Funkübertragungssystem nach Anspruch 1, wobei dem ersten Funkgerät (1) und dem zweiten Funkgerät (2) verschiedene Nominalfrequenzen für die Funkübertragung in beiden Funkübertragungsrichtungen zugeordnet sind, **dadurch gekennzeichnet, dass** das erste Funkgerät (1) dazu eingerichtet ist, die eigene Funksendefrequenz für eine Funksendung (B) zum zweiten Funkgerät (2) in Abhängigkeit von der Abweichung der erfassten Übertragungsfrequenz des zweiten Funkgerätes (2) von der betreffenden Nominalfrequenz des zweiten Funkgerätes (2) einzustellen.

4. Bidirektionales Funkübertragungssystem nach Anspruch 3, **dadurch gekennzeichnet, dass** das erste Funkgerät (1) dazu eingerichtet ist, die eigene Funksendefrequenz für eine Funksendung zum zweiten Funkgerät (2) in der Weise einzustellen, dass es seine Nominal-Funksendefrequenz um einen relativen Faktor ändert, der sich zumindest näherungsweise aus dem Verhältnis der erfassten Übertragungsfrequenz des zweiten Funkgerätes (2) zu der betreffenden Nominalfrequenz des zweiten Funkgerätes (2) ergibt.

5. Bidirektionales Funkübertragungssystem nach Anspruch 3, **dadurch gekennzeichnet, dass** das erste Funkgerät (1) dazu eingerichtet ist, die eigene Funksendefrequenz für eine Funksendung zum zweiten Funkgerät (2) in der Weise einzustellen, dass es seine Nominal-Funksendefrequenz um einen Differenzwert ändert, der der Frequenzdifferenz zwischen der erfassten Übertragungsfrequenz des zweiten Funkgerätes (2) zu der betreffenden Nominalfrequenz des zweiten Funkgerätes (2) zumindest näherungsweise entspricht.

6. Bidirektionales Funkübertragungssystem nach einem der Ansprüche 3 bis 5, **dadurch gekennzeichnet, dass** das zweite Funkgerät (2) dazu eingerichtet ist, im Frequenzbereich 869.4 MHz - 869.65 MHz zu senden.

7. Bidirektionales Funkübertragungssystem nach einem der Ansprüche 3 bis 5, **dadurch gekennzeichnet, dass** das erste Funkgerät (1) dazu eingerichtet ist, im Frequenzbereich 868.0 MHz - 868.6 MHzoder im Frequenzbereich 868.7 MHz - 869.2 MHzzu senden.

8. Bidirektionales Funkübertragungssystem nach einem der vorhergehenden Ansprüche, **dadurch gekennzeichnet, dass** es eine Vielzahl erster Funkgeräte (1) umfasst, die zur Funkkommunikation mit dem zweiten Funkgerät (2) eingerichtet sind.

9. Bidirektionales Funkübertragungssystem nach einem der vorhergehenden Ansprüche, **dadurch gekennzeichnet, dass** es in ein Verbrauchsdatenerfassungssystem integriert ist, wobei das erste Funkgerät (1) einem Verbrauchsmessgerät zugeordnet und dazu eingerichtet ist, Verbrauchsmesswerte des Verbrauchsmessgerätes an das zweite Funkgerät (2) zu senden.

10. Bidirektionales Funkübertragungssystem nach dem Oberbegriff des Anspruchs 1 oder einem der vorhergehenden Ansprüche, **dadurch gekennzeichnet, dass** das erste Funkgerät (1) dazu eingerichtet ist, bei Empfang eines Funksignals (A) von dem zweiten Funkgerät (2) dessen aktuelle Übertragungsfrequenz zu erfassen und die eigene Funkempfangsfrequenz für zukünftigen Funkempfang vom zweiten Funkgerät an die erfasste Übertragungsfrequenz anzupassen.
